# EUROPEAN PATENT APPLICATION

(11) **EP 4 001 034 A1**
(43) Date of publication of application: **25.05.2022**
(21) Application number: 20208295.4
(22) Date of filing: 18.11.2020
(51) Int. Cl.: B60T 17/00, B01D 53/26, F15B 21/048, B60T 13/66, F04B 49/02

(54) **METHOD FOR CONTROLLING AN AIR SUPPLY SYSTEM OF A VEHICLE, AN AIR SUPPLY SYSTEM OF A VEHICLE TO EXECUTE THE METHOD AND A RESPECTIVE COMPUTER PROGRAM PRODUCT**

(71) Applicant: KNORR-BREMSE Systeme für Nutzfahrzeuge GmbH, 80809 München (DE)
(72) Inventor: KISS, Istvan, 2330 Dunaharaszti (HU)
(74) Representative: Prüfer & Partner mbB Patentanwälte · Rechtsanwälte

(57) **Abstract**

The present invention relates to a method for controlling an air supply system (1) of a vehicle comprising a compressor (10) and an air dryer (20), the method comprising the following steps:
a) Monitoring at least one first compressor characteristic indicative of a generation of condensed water in the compressor (10) after the compressor (10) has been stopped,
b) starting and running a regeneration phase of the air supply system (1) when the at least one first compressor characteristic exceeds or falls below a predetermined threshold,
c) starting und running a load phase of the compressor (10) when a predetermined cut-in pressure in the air supply system (1) is reached, and
d) stopping at least the compressor (10) when a predetermined cut-off pressure in the air supply system (1) during the load phase is reached.

Further aspects of the invention relate to an air supply system of a vehicle to execute the method and a respective computer program product.

## Description

The present invention relates to a method for controlling an air supply system of a vehicle, an air supply system of a vehicle to execute the method and a respective computer program product.

A compressor duty, e.g. with respect to a compressor of a vehicle like a truck, is mainly affected by the air consumption of an assigned recipient. Depending on the compressor type, the compressor duty may be limited on both lower and higher ranges. To influence a compressor duty, it is known to change the compressor speed, if possible. However, electric driven compressors have both, minimal duty and rotation speed requirements that usually limit the minimal supportable air consumption by a vehicle or the like as recipient. Due to low duty of the compressor and therefore low temperature, the remaining condensed water in the compressor may increase and may result in compressor corrosion.

In view of the above, it is an object of the present invention to provide a method and respective implementation of such method to prevent or at least decrease the generation of condensed water in the compressor.

The object is solved by a method for controlling an air supply system of a vehicle according to claim 1 as well as an air supply system of a vehicle according to claim 11 and a computer program product according to claim 12 to execute such method.

According to the present invention, a method for controlling an air supply system of a vehicle comprising a compressor and an air dryer comprises the following steps:
a) Monitoring at least one first compressor characteristic indicative of a generation of condensed water in the compressor after the compressor has been stopped,
b) starting and running a regeneration phase of the air supply system when the at least one first compressor characteristic exceeds or falls below a predetermined threshold,
c) starting and running a load phase of the compressor when a predetermined cut-in pressure in the air supply system is reached, and
d) stopping at least the compressor when a predetermined cut-off pressure in the air supply system during the load phase is reached.

An air supply system comprising a compressor and an air dryer for the compressed air is usually capable of running a regeneration phase, wherein the drying agent of the air dryer is at least partially dehumidified after a certain operation time or continuously to regenerate the drying agent in terms of at least partially restore its absorbing capacity.

According to the disclosure, when a first monitored compressor characteristic indicative of a generation of condensed water after the compressor has been stopped reaches a predetermined critical threshold, the regeneration phase is started. Even though starting the regeneration phase may provide the benefit of further dehumidifying the drying agent within the air dryer, the main aspect according to the present method is the consumption of air of the compressor by the air dryer due to the regeneration phase and therefore lowering the pressure in the air supply system. By keeping the air supply system in the regeneration phase, air is exhausted from the compressor until a cut-in pressure in the air supply system is reached. With reaching the cut-in pressure, a load phase of the compressor can be started without potential disturbances or damages due to excessive pressure in the air supply system when starting the load phase. In other words, the basic principle of the invention is to achieve a secure compressor duty due to reducing the pressure in the air supply system in a limited time range by the use of the regeneration phase to arrive at the cut-in pressure where the compressor can be activated. Further, the compressor duty can be increased without overfilling the air supply system. The method may be advantageously applied for air supply systems with a minimal air consumption limitation. In summary, the method increases the air consumption, in particular if a minimal compressor duty cannot be reached by a compressor speed control.

The first compressor characteristic indicative of a generation of condensed water in the compressor relates to a characteristic that can be associated with the generation of condensed water in the compressor. In other words, such first characteristic may be a direct or indirect indicator of the generation of condensed water. Monitoring such first characteristic may be performed by sensor-based determinations or calculation-models. Predetermined thresholds of the first compressor characteristic may correspond to the likelihood of the generation of condensed water as such or to the generation of a certain amount of condensed water that may be expected to be critical, e.g. in terms of compressor corrosion. The respective threshold(s) may be adaptable, e.g. depending on different compressor types, materials, operation modes, operating history and the like.

As per the above, reaching a predetermined threshold of the first compressor characteristic results in starting and keeping the air supply system in the regeneration phase. Subsequently, the load phase of the compressor is started when the cut-in pressure has been reached and is kept running until the cut-off pressure causes the compressor to stop and the method may be repeated, i.e. the method returns to step a).

In summary, the compressor of the air supply system may be controlled in accordance with minimum duty requirements necessary to control the compressor temperature and condensation. Accordingly, additional regeneration cycles may be activated, independently of the state of the air dryer, to increase the vehicle overall air consumption if the air supply system works below the minimum compressor duty requirement. The principles of the invention may apply, for example, for reciprocal compressors as well as screw compressors, scroll compressors or rotary vain compressors.

In some embodiments, the at least one first compressor characteristic is an elapsed time after the compressor has been stopped, and the regeneration phase of step b) is started when at least the elapsed time exceeds a predetermined time threshold.

As per empirical knowledge, a compressor - after being stopped - should have been usually cooled down to a certain level after a predetermined time has been elapsed. The predetermined time corresponding to such certain level assumed as critical in view of the generation of condensed water is set as threshold. Monitoring the elapsed time after the compressor has been stopped to start the regeneration phase when the elapsed time is equal to or exceeds the predetermined time threshold is easy to implement. Particular detection means or estimation models may not be required.

Alternatively or in addition, the at least one or a further first compressor characteristic is a compressor duty, and the regeneration phase of step b) is started when at least the compressor duty falls below a predetermined duty threshold.

Similar as the predetermined elapsed time after the compressor has been stopped, a certain low compressor duty may be set as predetermined compressor duty threshold. When applying the compressor duty as further first compressor characteristic in addition to another first compressor characteristic, like the predetermined elapsed time, to be monitored, the regeneration phase may be started, for example, if the compressor duty reaches or falls below the predetermined duty threshold or the elapsed time reaches or exceeds the predetermined time threshold. Such setting may be applied, for example, for redundancy reasons. Alternatively, the regeneration phase may be started, for example, if the compressor duty reaches or falls below the predetermined duty threshold and the elapsed time reaches or exceeds the predetermined time threshold. In principle, applying at least two first compressor characteristics to be monitored may also allow plausibility checks of the monitored characteristics.

Alternatively or in addition, the at least one or a further first compressor characteristic is a compressor temperature, and wherein the regeneration phase of step b) is started when at least the compressor temperature falls below a predetermined temperature threshold.

Similar to the above, the regeneration phase may be started according to a respectively set predetermined temperature threshold as such or in combination with at least one of another threshold in addition or alternatively as described by way of example with respect to the duty threshold.

In some embodiments, at least one second compressor characteristic indicative of predetermined air consumption is at least monitored during the load phase of step c), and steps b) to d) are repeated in a loop as long as the at least one second compressor characteristic is not equal to or does not exceed or fall below a predetermined threshold.

The respective predetermined threshold for the monitored second characteristic may correspond to a predetermined amount of air consumption assumed to be sufficient to mitigate the risk of the generation of condensed water in an amount causing disadvantageous effects like compressor corrosion. The second compressor characteristic may be equal to a first compressor characteristic or differently therefrom. In the event of equal first and second compressor characteristics, the different consequences on the control of the air supply system are provided by different respective predetermined thresholds. Accordingly, it is distinguished between the first and second compressor characteristic in terms of thresholds and effects on the control but not necessarily in terms of the characteristic to be monitored as such. For example, the second compressor characteristic may also be a compressor duty, as addressed below, but with respect to a sufficient air consumption with the effect of stopping the repetition of steps b) to d) the compressor duty has to reach or exceed a certain predetermined compressor duty threshold, contrary to falling below a predetermined duty threshold as per the first compressor characteristic to be monitored. Similar to thresholds in view of the first compressor characteristic(s), the thresholds in view of the second compressor characteristic(s) may be adaptable, e.g. depending on different compressor types, materials, operation modes, operating history and the like. Further, the thresholds in view of the second compressor characteristic(s) may be preferably different from the thresholds in view of the first compressor characteristic(s), if the first and second compressor characteristics are equal. Such different thresholds reflect the different indications with respect to the generation of condensed water in the compressor and air consumption.

In particular, the at least one second compressor characteristic is an accumulated compressor activation time, and steps b) to d) are repeated as long as at least the accumulated compressor activation time is less than a predetermined accumulated activation time.

The accumulated compressor activation time corresponds to the accumulated duration of the load phase or load phases, if steps b) to d) are repeated. As a single load phase from starting the load phase when reaching the cut-in pressure until stopping the compressor when reaching the cut-off pressure may not provide sufficient air consumption, the method returns to step b) accordingly. The accumulated compressor activation time may be easy to monitor without necessarily requiring specific detection means or estimation models.

Alternatively or in addition, the at least one or a further second compressor characteristic is the compressor duty, and steps b) to d) are repeated as long as at least the compressor duty is less than a predetermined compressor duty.

As per the above, the compressor duty to be monitored as second compressor characteristic may be equal to the first compressor characteristic but is applied as another indicator with a different effect on the control of the air supply system.

Further, applying the compressor duty as second compressor characteristic in addition to another second compressor characteristic may be implemented analogously to the application of at least to different first compressor characteristics as described above.

Alternatively or in addition, the at least one or a further second compressor characteristic is the compressor temperature, and steps b) to d) are repeated as long as at least the compressor temperature is less than a predetermined compressor temperature.

Similarly as per the above, the compressor temperature as a second compressor characteristic can be monitored as such or in addition to at least another second compressor characteristic. In some embodiments, the compressor temperature may also be monitored for other reasons and may therefore already be available. This may also apply for other first and second compressor characteristics.

Alternatively or in addition, the at least one or a further second compressor characteristic is a number of repetitions of steps b) to d), and steps b) to d) are repeated as long as at least the number of repetitions of steps b) to d) is less than a predetermined number of repetitions.

Similar to the accumulated compressor activation time, the number of repetitions of steps b) to d) may be monitored quite easily without necessarily implementing specific detection means or estimation models.

In some embodiments, the regeneration phase of step b) is stopped when turning to step c).

As the regeneration phase may be mainly intended to accelerate the reduction of pressure in the air supply system to reach the cut-in pressure, the regeneration phase may be stopped when reaching the cut-in pressure and starting the load phase. Alternatively, the regeneration phase may also be maintained at last partially during the load phase, e.g. for further dehumidifying the drying agent. Accordingly, in step d) only the compressor may be stopped while the air supply system, e.g. with respect to maintaining the regeneration phase, is still active.

In a further aspect, the disclosure is directed to an air supply system comprising a compressor, an air dryer and a control device, wherein the control device is configured to execute the method as described above.

The control device may be a separate control device but may also be incorporated in the compressor, the air dryer or another component of the air supply system, or forms a part of the respective control of one of these items.

The same advantages as already addressed with respect to the method as such also apply for a respective air supply system.

In a further aspect, the disclosure is directed to a computer program product comprising a program code stored on a machine-readable medium, and, when being executed on a data processing device, configured to cause the data processing device to execute the method as described above.

Further advantages, aspects and details of the disclosure are subject to the claims, the following description of preferred embodiments applying the principles of the disclosure and drawings. In particular:
**Fig. 1** is a flow chart of a method for controlling an air supply system according to a first exemplary embodiment of the present invention;
**Fig. 2** is a flow chart of a method for controlling an air supply system according to a second exemplary embodiment of the present invention; and
**Fig. 3** is a schematic diagram of an exemplary air supply system to execute the method according to the disclosure.

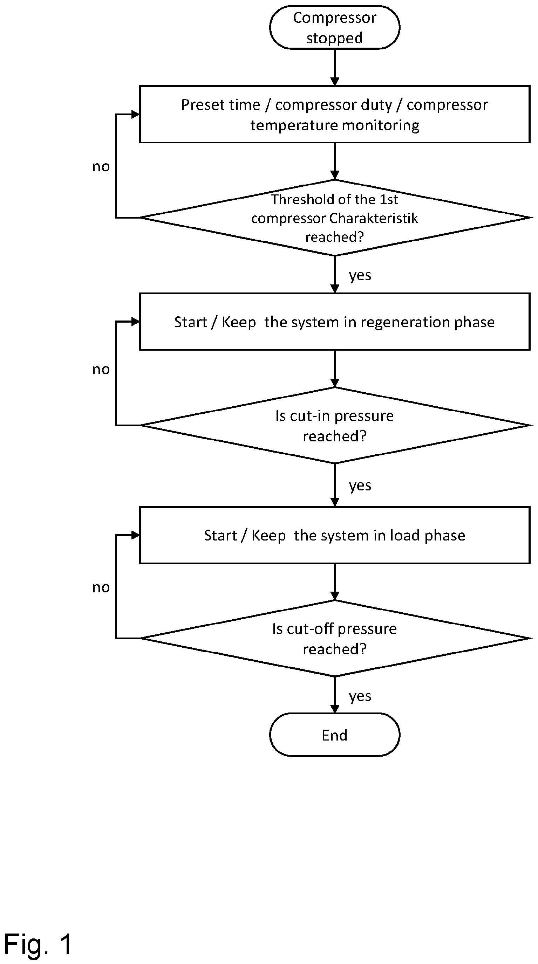

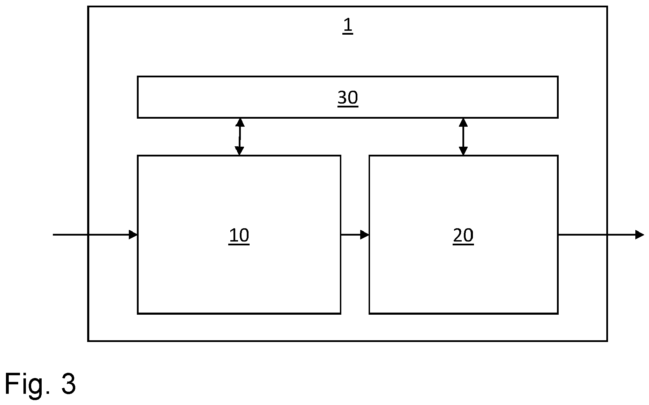

**Fig. 1** shows a flow chart of a method for controlling an air supply system 1 (Fig. 3) according to a first exemplary embodiment of the present invention. According to the first embodiment of the method, after the compressor (10) has been stopped, an elapsed time after stopping of the compressor, a compressor duty and/or a compressor temperature as first compressor characteristic or characteristics indicative as such or in a particular combination of the generation of condensed water in the compressor is monitored with respect to reaching a preset threshold. As an example, the compressor temperature may be monitored to reach or fall below a predetermined compressor temperature threshold. Alternatively or in addition, the compressor duty may be monitored to reach or fall below a predetermined compressor duty threshold. Further, alternatively or in addition, the time elapsed after the compressor has been stopped may be monitored to reach or exceed a predetermined time threshold. If at least one or a specific combination of the aforementioned first compressor characteristics reaches the respective threshold or thresholds, a regeneration phase is started. In the regeneration phase, the air dryer 20 (Fig. 3) air from the compressor 10 is received by the air dryer 20 arranged downstream of the compressor 10, whereby the pressure in the compressor 10 is reduced. The regeneration phase is at least continued until the pressure within the air supply system reaches a predetermined cut-in pressure. This may be monitored by respective detection means or assumed or determined indirectly by other factors. If the cut-in pressure is reached a load phase of the compressor is started, e.g. the compressor is activated. The load phase is continued until the pressure within the air supply system reaches a predetermined cut-off pressure. If the cut-off pressure is reached, the compressor is stopped and the method may proceed with the monitoring of at least one of the first compressor characteristics.

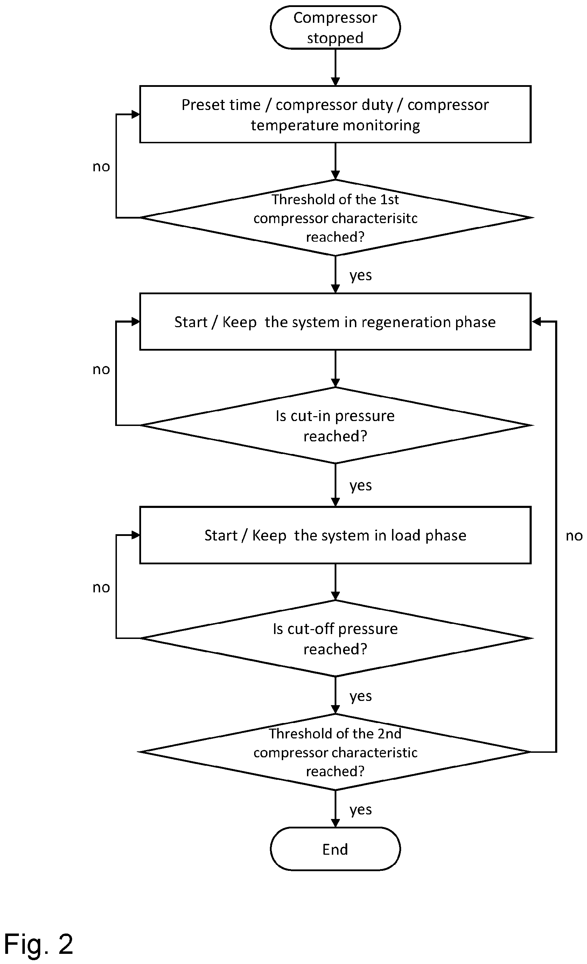

**Fig. 2** shows a flow chart of a modified method for controlling an air supply system 1 according to a second exemplary embodiment of the present invention. The method of the second embodiment differs from the first embodiment in that at least one second compressor characteristic indicative of an air consumption is monitored when the cut-off pressure has been reached and the compressor is stopped. The second compressor characteristic may be an accumulated compressor activation time, a compressor duty, a compressor temperature and/or a number of regeneration-load cycles in view of respectively set thresholds. If the at least one or a specific combination of the second compressor characteristics has not reached the respective threshold or thresholds, the method returns to the start of the regeneration phase and thereby repeating the regeneration-load cycle. Otherwise, the method may proceed with the monitoring of at least one of the first compressor characteristics. As a remark, if the regeneration phase has not been stopped when the starting the load phase within one regeneration-load cycle, the regeneration phase is simply maintained in the next cycle at least until the cut-in pressure is reached again. Accordingly, the regeneration phase has not to be restarted in such event.

**Fig. 3** shows a schematic diagram of an exemplary air supply system 1 to execute the method according to the disclosure. The air supply system 1 comprises a compressor 10, an air dryer 20 arranged downstream of the compressor 20 with respect to the air flow indicated by the horizontal arrows and a control 30 capable of controlling operation of the compressor 10 and the air dryer 20.

The invention has been described in conjunction with various embodiments herein. However, the invention is not limited to the described embodiments.

### LIST OF REFERENCE SIGNS

- 1: air supply system
- 10: compressor
- 20: air dryer
- 30: control device

## Claims

1. Method for controlling an air supply system (1) of a vehicle comprising a compressor (10) and an air dryer (20), the method comprising the following steps:
a) Monitoring at least one first compressor characteristic indicative of a generation of condensed water in the compressor (10) after the compressor (10) has been stopped,
b) starting and running a regeneration phase of the air supply system (1) when the at least one first compressor characteristic exceeds or falls below a predetermined threshold,
c) starting and running a load phase of the compressor (10) when a predetermined cut-in pressure in the air supply system (1) is reached, and
d) stopping at least the compressor (10) when a predetermined cut-off pressure in the air supply system (1) during the load phase is reached.

2. The method according to claim 1, wherein the at least one first compressor characteristic is an elapsed time after the compressor (10) has been stopped, and wherein the regeneration phase of step b) is started when at least the elapsed time exceeds a predetermined time threshold.

3. The method according to claim 1 or 2, wherein the at least one or a further first compressor characteristic is a compressor duty, and wherein the regeneration phase of step b) is started when at least the compressor duty falls below a predetermined duty threshold.

4. The method according to one of the preceding claims, wherein the at least one or a further first compressor characteristic is a compressor temperature, and wherein the regeneration phase of step b) is started when at least the compressor temperature falls below a predetermined temperature threshold.

5. The method according to any of one of the preceding claims, wherein at least one second compressor characteristic indicative of predetermined air consumption is at least monitored during the load phase of step c), and wherein steps b) to d) are repeated in a loop as long as the at least one second compressor characteristic is not equal to or does not exceed or fall below a predetermined threshold.

6. The method according to claim 5, wherein the at least one second compressor characteristic is an accumulated compressor activation time, and wherein steps b) to d) are repeated as long as at least the accumulated compressor activation time is less than a predetermined accumulated activation time.

7. The method according to one of the claims 5 or 6, wherein the at least one or a further second compressor characteristic is the compressor duty, and wherein steps b) to d) are repeated as long as at least the compressor duty is less than a predetermined compressor duty.

8. The method according to one of the claims 5 to 7, wherein the at least one or a further second compressor characteristic is the compressor temperature, and wherein steps b) to d) are repeated as long as at least the compressor temperature is less than a predetermined compressor temperature.

9. The method according to one of the claims 5 to 8, wherein the at least one or a further second compressor characteristic is a number of repetitions of steps b) to d), and wherein steps b) to d) are repeated as long as at least the number of repetitions of steps b) to d) is less than a predetermined number of repetitions.

10. The method according to any one of the preceding claims, wherein the regeneration phase of step b) is stopped when turning to step c).

11. Air supply system (1) of a vehicle comprising a compressor (10), an air dryer (20) and a control device (30), wherein the control device (30) is configured to execute the method according to one of the claims 1 to 10.

12. Computer program product comprising a program code stored on a machine-readable medium, and, when being executed on a data processing device, configured to cause the data processing device to execute the method according to one of the claims 1 to 11.

## Amended claims

### Amended claims in accordance with Rule 137(2) EPC.

1. Method for controlling an air supply system (1) of a vehicle comprising a compressor (10) and an air dryer (20), **characterized in that** the method comprises the following steps:
a) Monitoring at least one first compressor characteristic indicative of a generation of condensed water in the compressor (10) after the compressor (10) has been stopped,
b) starting and running a regeneration phase of the air supply system (1) when the at least one first compressor characteristic exceeds or falls below a predetermined threshold,
c) starting and running a load phase of the compressor (10) when a predetermined cut-in pressure in the air supply system (1) is reached, and
d) stopping at least the compressor (10) when a predetermined cut-off pressure in the air supply system (1) during the load phase is reached.

2. The method according to claim 1, wherein the at least one first compressor characteristic is an elapsed time after the compressor (10) has been stopped, and wherein the regeneration phase of step b) is started when at least the elapsed time exceeds a predetermined time threshold.

3. The method according to claim 1 or 2, wherein the at least one or a further first compressor characteristic is a compressor duty, and wherein the regeneration phase of step b) is started when at least the compressor duty falls below a predetermined duty threshold.

4. The method according to one of the preceding claims, wherein the at least one or a further first compressor characteristic is a compressor temperature, and wherein the regeneration phase of step b) is started when at least the compressor temperature falls below a predetermined temperature threshold.

5. The method according to any of one of the preceding claims, wherein at least one second compressor characteristic indicative of predetermined air consumption is at least monitored during the load phase of step c), and wherein steps b) to d) are repeated in a loop as long as the at least one second compressor characteristic is not equal to or does not exceed or fall below a predetermined threshold.

6. The method according to claim 5, wherein the at least one second compressor characteristic is an accumulated compressor activation time, and wherein steps b) to d) are repeated as long as at least the accumulated compressor activation time is less than a predetermined accumulated activation time.

7. The method according to one of the claims 5 or 6, wherein the at least one or a further second compressor characteristic is the compressor duty, and wherein steps b) to d) are repeated as long as at least the compressor duty is less than a predetermined compressor duty.

8. The method according to one of the claims 5 to 7, wherein the at least one or a further second compressor characteristic is the compressor temperature, and wherein steps b) to d) are repeated as long as at least the compressor temperature is less than a predetermined compressor temperature.

9. The method according to one of the claims 5 to 8, wherein the at least one or a further second compressor characteristic is a number of repetitions of steps b) to d), and wherein steps b) to d) are repeated as long as at least the number of repetitions of steps b) to d) is less than a predetermined number of repetitions.

10. The method according to any one of the preceding claims, wherein the regeneration phase of step b) is stopped when turning to step c).

11. Air supply system (1) of a vehicle comprising a compressor (10), an air dryer (20) and a control device (30), **characterized in that** the control device (30) is configured to execute the method according to one of the claims 1 to 10.

12. Computer program product comprising a program code stored on a machine-readable medium, and **characterized in that** the program code, when being executed on a data processing device, is configured to cause the data processing device to execute the method according to one of the claims 1 to 10.
